Europäisches Patentamt

European Patent Office

Office européen des brevets

(11) Publication number: **0 155 821**
**A2**

## EUROPEAN PATENT APPLICATION

(21) Application number: **85301765.5**

(22) Date of filing: **14.03.85**

(51) Int. Cl.⁴: **G 02 B 6/28**
**G 02 B 6/44**

(30) Priority: **21.03.84 GB 8407374**

(43) Date of publication of application:
**25.09.85 Bulletin 85/39**

(84) Designated Contracting States:
**AT BE CH DE FR IT LI LU NL SE**

(71) Applicant: **STANDARD TELEPHONES AND CABLES
PUBLIC LIMITED COMPANY
190 Strand
London, WC2R 1DU(GB)**

(72) Inventor: **Leach, John Stuart
44 Rochford Road
Bishops Stortford Herts(GB)**

(72) Inventor: **Allos, Talal Isaac Yousif
119 Newlaithes Road
Horsforth Leeds LS18 4SX(GB)**

(74) Representative: **Laurence, Simon French
STC Patent Department Edinburgh Way
Harlow Essex CM20 2SH(GB)**

(54) Multiport optical fibre couplers.

(57) A multiport optical fibre coupler employs plastics clad silica fibre (1) for reasons of efficiency of coupling. Within the coupler housing (9) the outboard ends of these fibres are fusion spliced (8) to vapour deposited silica fibre (7) that has a waveguiding structure within the glass as this is easier to terminate in a reliable way that will withstand more adverse conditions than can be withstood by plastics clad silica terminations.

*Fig.3.*

Croydon Printing Company Ltd.

EP 0 155 821 A2

## MULTIPORT OPTICAL FIBRE COUPLERS

This invention relates to multimode optical fibre multiport couplers of a type employing glass optical fibre possessing no optical waveguiding structure within the glass. A particular example of such fibre is given by plastics-clad-silica (pcs) fibre. In pcs fibre the silica functions as the optical core of the fibre, while the plastics coating surrounding the silica functions as its optical cladding.

In one form of optical coupler employing this type of fibre the requisite optical coupling between fibres is achieved by bringing their cores into side by side contact over an intermediate portion of their length and fusing them together. It is convenient to use pcs fibre for this purpose because it is relatively easy to strip the cladding from such fibre and expose the optical core.

In another form of optical coupler employing this type of fibre optical coupling between the fibres is achieved by means of an optical mixer element with which he fibres are optically coupled by their ends. In this instance, any light that emerges from the optical coupling element and is not launched into the core of one of the fibres is wasted light, hence it is desirable to maximise the optical core cross-sectional area packing fraction of the fibres where they abut the optical mixer element. This means that it is desirable to remove the optical claddings from the fibres in these regions, and once again it is therefore convenient to employ pcs fibre on account of the relative ease with which the plastics cladding can be stripped from its core.

Multiport optical couplers of both these forms have been made with pcs fibre in which the lengths of pcs fibre have been terminated in optical connectors on the surface of a housing containing the coupler. The method of making such optical connector terminations may be substantially as described in United Kingdom Patent Specification No. 2028530A, and for many applications the performance of such terminations is quite satisfactory. However, for other applications involving the meeting of particularly stringent design criteria these terminations pose problems because the optical core is prone to movement within the termination over a long period of time or when subject to wide variations in temperature. Substantially, the same problem exists if the lengths of pcs fibre do not terminate in connectors at the exterior of the housing but extend as pigtails of pcs fibre. The problem is essentially a problem of making a stable connection with an optical fibre when the optical core of that fibre is liable to move relative to its optical cladding. The same problems are not encountered when terminating glass optical fibre that does contain a waveguiding structure within the glass. This is because it is so much easier to make a direct firm anchorage with the glass without thereby engendering excessive optical loss. A particular example of fibre of this type is vapour deposited silica (vds) fibre. In vds fibre the silica deposit is doped with one or more other oxides, and sometimes fluorine, in varying amounts in order to provide a refractive index profile within the deposited material that has waveguiding properties and thus contains an optical core region surrounded by an optical cladding. The deposition of the doped silica may for instance be by the internal method involving deposition upon the internal surface of a glass substrate tube whose bore is subsequently collapsed to form a preform from which optical fibre may be obtained by drawing. The glass substrate tube is itself typically a silica tube, though it may alternatively be a glass slightly less refractory glass rich in silica that has a thermal coefficient of expansion more closely matched with the doped silica deposit.

The present invention is concerned with designs of optical coupler which employ lengths of glass optical fibre possessing the optical waveguiding structure within the glass but do not require those fibres to be terminated in connectors.

According to the present invention there is provided a multimode multiport optical fibre coupler which includes a housing whose walls are penetrated by the members of a plurality of glass optical fibres whose inboard ends are optically coupled with an optical mixer, which coupler is characterised in that the members of said plurality of optical fibres possess their optical waveguiding structure within the glass of those fibres, that their inboard ends are individually fusion spliced to the members of a set of glass optical fibres each of which has an optical core matched in size with that of the optical cores of the members of said plurality of optical fibres, and that said set of optical fibres constitutes at least a part of said optical mixer which mixer provides optical coupling between the members of said set of optical fibres.

The outboard ends of the members of the sets of fibres may terminate in one or more bulkhead connectors mounted on the housing or they may extend further as external pigtails. Such pigtails may be provided with individual connectors or they may be left for direct splicing into the optical fibre system for which the coupler is destined.

There follows a description of multiport couplers embodying the invention in preferred forms. The description refers to the accompanying drawings, in which:

Figure 1 depicts a pair of fibres before fusion of their cores.

Figure 2 depicts the fibres of Figure 1 after fusion of their cores and after the fused region has been placed in a protective sleeve.

Figure 3 depicts a coupler employing as the coupling element the assembly of Figure 2.

Figures 4 and 5 depict views of an assembly incorporating a discrete optical mixer element, and

Figure 6 depicts a coupler employing as the coupling element the assembly of Figures 4 and 5.

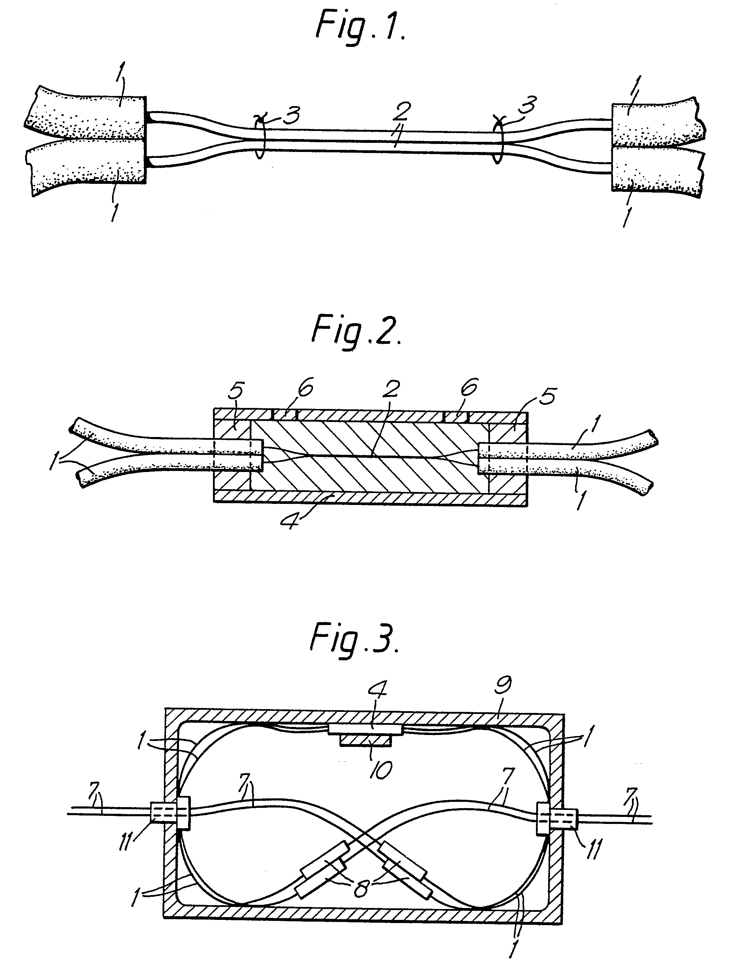

The first coupler to be described is of the type that does not use a separate optical mixing element but instead achieves coupling in a region where the optical cores of two, three or four fibres are fused together. Figure 1 shows two pcs fibres 1, each of which has had its plastics optical cladding removed over a portion of its length to expose bare fibre optical core 2. The plastics cladding may be removed with concentrated sulphuric acid or alternatively it may be removed mechanically, for instance, by the method described in United Kingdom Patent Specification No. 2071005A. Where mechanical methods are used, care must be taken to see that the stripped region is freed from residue. Typically the cladding is removed over a distance of about 2cm. The two optical cores are held in side-by-side contact with each other by means of temporary wire bindings 3, while the cores are heat-softened sufficiently for them to fuse together along their line of contact thus producing a figure-of-eight cross-sectional profile. The fused together region is typically confined to about 5mm at the mid-point of stripped region, and the central portion of this is then further heated to cause the cores to coallesce and assume a substantially circular profile. After this it may be necessary to heat soften the ends of the fused region and slightly stretch the fibres to remove any kinds that have appeared in the immediate vicinity of the ends of the fused region. The binding wires 3 are removed and the assembly is threaded through a borosilicate glass sleeve 4 (Figure 2), provided for mechanical protection. The assembly is secured centrally within the sleeve 4 having its ends plugged with two fillets 5 of for instance, epoxy resin which terminate short of the exposed core regions 2. Then the whole interior is filled via one of two holes 6 with a low index material to provide an optical cladding for those regions. Conveniently a room temperature vulcanising silicone rubber is used for this purpose.

Next at some distance from the coupling region protection sleeve 4, typically at least 10cm from the sleeve the plastics optical cladding is stripped from the ends of the optical fibres 1 in preparation for each end to be fusion spliced to a separate length of vds fibre 7 (Figure 3), whose optical core is matched in size with that of the pcs fibre. In a typical example the pcs fibre has a core 100 µm in diameter while the overall diameter of the glass of the vds fibre is 250 µm with a 100 µm core diameter.

For each splice a splice protection sleeve 8 of similar construction and function to the coupling region protection sleeve 4 is slipped over the vds fibre 7 which also has had any plastics coating in the glass stripped back from its end. The ends to be spliced are carefully cleaved to provide plane end faces that are substantially normal to their respective fibre axes. The prepared fibres are mounted in Vee grooves in a fusion splicing jig that incorporates a micromanipulator that allows the height of one Vee groove to be adjusted with respect to the other. The fibres are geometrically aligned in the jig while their ends are separated by the minimum distance required to ensure that they cannot touch and thereby push each other out of alignment. Geometrical

- 6 -                                    0155821

alignment of the fibre axis is conveniently achieved
using a microscope in conjunction with a mirror angled to
provide two orthogonal images of the fibres in the field
of view of the microscope.  The fibres are axially
retracted before an electric arc is struck and then the
fibres are advanced at a controlled rate into the arc to
a point just beyond that where theoretically they should
meet.  The movement is halted at this stage, and a little
later the arc is extinguished.  In making a conventional
fusion splice between fibres of the same size it is
general practice for the arc to be symmetrically disposed
with respect to the two fibres, but in this instance
where the fibres are significantly different in size it
may be preferred to employ an asymmetrical arrangement
with the arc slightly displaced towards the side with the
larger diameter fibre in order to take account of the
greater mass of material on this side that has to be
brought to the fusion temperature.

        After each splice has been made its associated
protection sleeve 8 is placed in position over the
splice.  It is secured in position with resin fillets in
the same manner as sleeve 4 is secured to its fibres, and
similarly care is taken to ensure that these fillets
terminate short of the exposed core of regions of the pcs
fibre.  Then, also following the method used in
connection with the sleeve 4, the interior of each sleeve
is filled with a low refractive index silicone rubber to
serve as the optical cladding for the exposed core region
of the pcs fibre within that sleeve.

        After all the splices have been made and encased
in their protective sleeves the assembly is placed inside
a shallow box 9 which may for instance be constructed in
aluminium.  A lug 10 protruding from the base of the box
serves to locate the coupling region protective sleeve 4
to one side of the box and the fibres are disposed in
gentle curves around the interior of the box and out
through glands which serve the dual function of clamping the fibres and giving them a measure of protection from excessive bending in the immediate vicinity of the region where they emerge from the box.

For added protection the interior of the box may be filled with a room temperature curing silicone rubber before the fitting of a lid (not shown) to the box.

By way of example only Figures 1, 2 and 3 specifically depict a 4-port coupler. The design is very simply adapted to produce a 6 or 8 port coupler by fusing together three or four pcs fibre cores, instead of the two cores of these figures. However, to increase the number of ports beyond eight gives rise to increasing difficulties in getting all the fibres to fuse together in an appropriate manner and hence it may be preferred to effect the optical coupling in a discrete optical mixing element to which optical fibres are optically coupled.

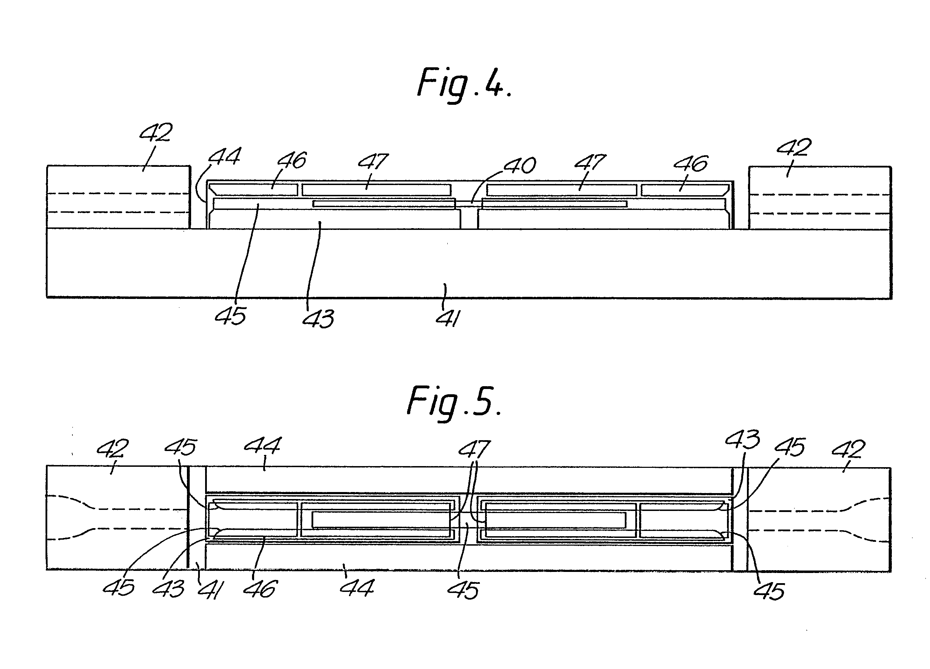

A coupler incorporating such a mixing element will now be described with particular reference to Figures 4, 5 and 6. This is a 32-port coupler in which the ports are divided into two groups of 16 which are arranged such that light directed into any port of either group is directed to emerge from the coupler substantially equally divided between all the members of the other group. The mixing element for this coupler consists of a slender slab 40 of glass marginally thicker than the diameter of the core diameters of the pcs fibres with which it is to be coupled, marginally wider than 16 times the core diameter width and typically about 500 as long as it is thick.

A glass base plate 41 has a fibre clamp 42 secured at each end. The region between these clamps 42 is smeared with uncured low index silicone resin on which are stuck down two long metallised glass plates 43 separated by about 3mm from each other and located centrally on the base plate by means of two side plates 44. More uncured resin is then used to stick down the mixing element 40 centrally over the plates and it is held in position by too further side plates 45 that are about 5 microns thicker than the mixer element. Further uncured resin is then employed to stick down two metallised end plates 46 that are spaced about 3mm from the ends of the cover plates 46.

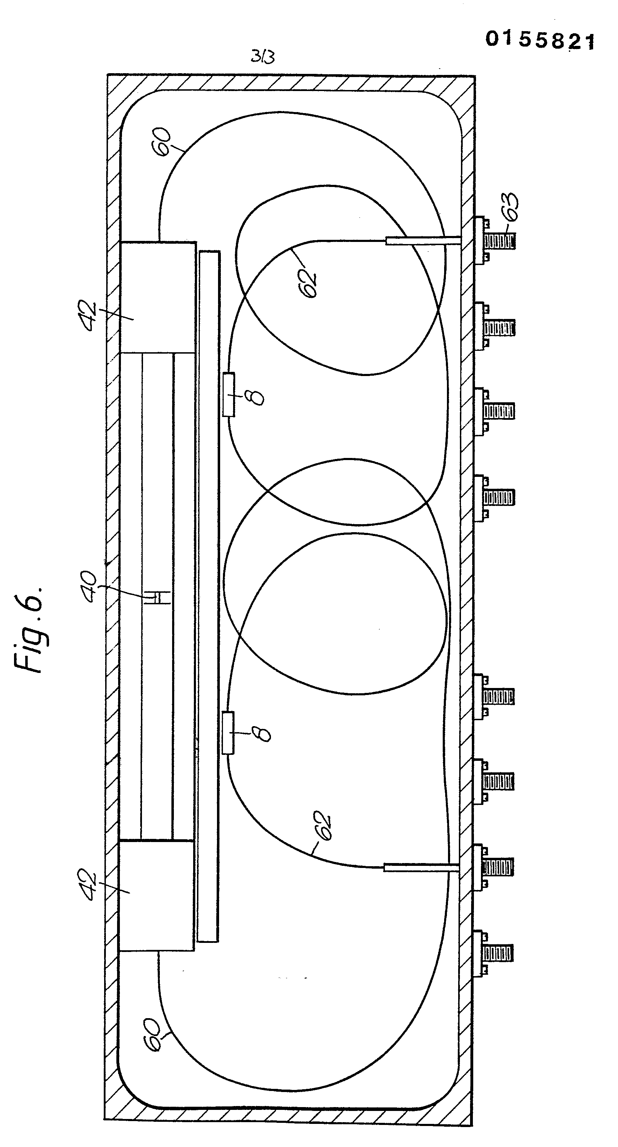

The bared ends of 16 fibres 60 (Figure 6), are introduced through each clamp 42 which constrains them to lie side-by-side in a single thickness layer. A chamfer on the metallised plates 43 and 46 and on the side plates 45 defines flared channels into which the bared ends are inserted until they butt up against the ends of the mixer element. In this position the bared region of all the fibres has been inserted fully through their clamps, so that these clamps bear against their plastics claddings rather than their bare cores. Into the gaps at both ends of the end plates 46 is dispensed further resin to fill all the spaces between the bared fibres so as to provide them with a reconstituted optical cladding that is backed up by the reflection provided by the metallisation. Then, with further resin, two metallised cover plates 47 are stuck down between the two end plates 46 to leave a gap of about 3mm between their inner ends that registers with the equivalent gap between the inner ends of the plates 43. The resin and metallisation perform a similar function in respect of the mixer element 40. Resin is also applied around the mixer element where it spans the gap that has been left between pairs of plates 43 and 47 in order to allow for small misalignment of the two ends.

At this stage the assembly is then ready for curing to form the resin into a silicone rubber. After curing, the assembly is located in a box 61 provided with a channel at one side to accommodate the assembly. Location of the assembly in the box may be preceded or followed by splicing the other ends of the fibres 60 to individual lengths of vds fibre 62. This splicing is performed in the same manner as the equivalent splices of the coupler of Figures 1, 2 and 3. The completed

- 9 - 0155821

individual splices are similarly protected by sleeves 8. The other ends of the vds fibres are in this instance shown as terminating in individual bulkhead-mounted optical fibre connectors mounted on the side wall of the box in two four-by-four arrays. (For illustrative convenience most of the fibres and their splices have been omitted from the drawing.) If desired, the separate connectors for each of fibres can be replaced with a smaller number of multi-terminal connectors, possibly even a single connector. Alternatively, the fibres may be fed individually through the walls of the box or in one or more groups to form pigtail connections.

After assembly of all the components in the box has been completed it may be filled with a room temperature curing silicone rubber before the fitting of a lid (not shown) to the box.

The type of mixer element described with reference to Figures 4, 5 and 6, has optical fibres coupled to both ends. Another form of mixer element exists in which all the fibres are coupled to one end and a reflecting facet is provided at the other. It should be evident that this invention is applicable also to couplers employing this reflex type of mixer element.

CLAIMS :

1.      A multimode multiport optical fibre coupler which includes a housing whose walls are penetrated by the members of a plurality of glass optical fibres whose inboard ends are optically coupled with an optical mixer, which coupler is characterised in that the members of said plurality of optical fibres possess their optical waveguiding structure within the  glass of those fibres, that their inboard ends are individually fusion spliced to the members of a set of glass optical fibres each of which has an optical core matched in size with that of the optical cores of the members of said plurality of optical fibres, and that said set of optical fibres constitutes at least a part of said optical mixer which mixer provides optical coupling between the members of said set of optical fibres.

2.      A multimode optical fibre coupler as claimed in claim 1, wherein said set of optical fibres constitute said optical mixer and, in a region intermediate their ends, the members of said set of optical fibres are fused together in a side-by-side glass-to-glass relationship to provide mutual optical coupling between their number.

3.      A multimode optical fibre coupler as claimed in claim 1, wherein said set of optical fibres constitute a part of said optical mixer the remainder of which is provided by an optical mixer element against one end of which, or two opposed ends of which, the ends of the members of said set of optical fibres are butted in side-by-side glass-to-glass relationship.

4.      A multimode optical fibre coupler as claimed in claim 3, wherein the optical fibres abutted against the optical mixer element are arranged in a linear array only one fibre thick.

5.      A multimode optical fibre coupler as claimed in any preceding claim, wherein the members of said plurality of optical fibres extend through the walls of the housing to the exterior as optical fibre pigtails.

6.     A multimode optical fibre coupler as claimed in any claim of claims 1 to 4, wherein the members of said plurality of optical fibres terminate in one or more bulkhead optical fibre connectors on the housing.

7.     A multimode multiport optical fibre coupler which includes a housing whose walls are penetrated by the members of first and second sets of glass optical fibres whose inboard ends are optically coupled with the opposite ends of an optical mixer element, which coupler is characterised in that the members of said first and second sets of optical fibres possess their optical waveguiding structure within the glass of those fibres, that their inboard ends are individually fusion spliced to the outboard ends of the members of third and fourth sets of glass optical fibres each of which has an optical core matched in size with that of the optical cores of the members of the first and second sets of optical fibres and possesses no optical waveguiding structure within its glass, and in that the inboard ends of the members of the third set of optical fibres are arranged in side-by-side glass-to-glass contact with their end faces butted against one end of the mixer element while the inboard ends of the members of the fourth set are similarly arranged with their end faces butted against the opposite end of the optical mixer element.

8.     A multimode optical fibre coupler as claimed in claim 5, wherein at each of the two ends of the optical mixer element the abutted optical fibres are arranged in a linear array only one fibre thick.

9.     A multimode multiport optical fibre coupler which includes a housing whose walls are penetrated by the members of first and second sets of glass optical fibres whose inboard ends are optically coupled with an optical mixer, which coupler is characterised in that the members of said first and second sets of optical fibres possess their optical waveguiding structure within the glass of those fibres, that their inboard ends are individually fusion spliced to the ends of the members of third set of glass optical fibres each of which has an optical core matched in size with that of the optical cores of the members of the first and second sets of optical fibres and possesses no optical waveguiding structure within its glass, and in that the ends of the members of the third set of optical fibres are fused together in side-by-side glass-to-glass relationship to provide mutual optical coupling between their number.

10. A multimode optical fibre coupler as claimed in claim 7, 8 or 9, wherein the members of said first and second sets of optical fibres extend through the walls of the housing to the exterior as optical fibre pigtails.

11. A multimode optical fibre coupler as claimed in claim 7, 8 or 9. wherein the members of said first and second sets of optical fibres terminate in one or more bulkhead optical fibre connectors on the housing.

# Fig.1.

# Fig.2.

# Fig.3.

## Fig.4.

42    44   46   47    40   47    46    42

45    43    41

## Fig.5.

42   45   44    47    43   45   42

45   43   41   46    44    45     45

Fig.6.